# EUROPEAN PATENT SPECIFICATION

(11) **EP 4 357 159 B1**
(45) Date of publication and mention of the grant of the patent: **10.09.2025**
(21) Application number: 23198835.3
(22) Date of filing: 21.09.2023
(51) Int. Cl.: B60C 11/00, B60C 13/02, B60C 19/00, B60C 5/14, B60C 11/03

(54) **PNEUMATIC TIRE**
LUFTREIFEN
PNEUMATIQUE

(30) Priority: 21.10.2022 JP 2022168897; 21.10.2022 JP 2022168896; 21.10.2022 JP 2022168898; 21.10.2022 JP 2022168900
(43) Date of publication of application: 24.04.2024
(73) Proprietor: Sumitomo Rubber Industries, Ltd., Kobe-shi, Hyogo-ken 651-0072 (JP)
(72) Inventor: SASAKI, Tatsuya, Kobe-shi, 651-0072 (JP); YANO, Tsukasa, Kobe-shi, 651-0072 (JP); ONITSUKA, Rena, Kobe-shi, 651-0072 (JP); NISHIJIMA, Shigeki, Kobe-shi, 651-0072 (JP); TERASHIMA, Masaki, Kobe-shi, 651-0072 (JP); SUEYOSHI, Yusuke, Kobe-shi, 651-0072 (JP); SUENO, Junya, Kobe-shi, 651-0072 (JP)
(74) Representative: Manitz Finsterwald Patent- und Rechtsanwaltspartnerschaft mbB

(56) References cited:
- EP-A1- 1 011 991
- EP-A1- 2 738 017
- EP-A1- 2 927 027
- DE-A1- 102013 106 015
- JP-A- H0 724 928

## Description

### Technical field

The present invention relates to a pneumatic tire.

### Background art

JP 2022-096037 A discloses a tire having a tread provided with a plurality of circumferential grooves.

In this tire, a ratio of a total groove width of the circumferential grooves to a contact width of a reference ground contact surface of the tread is set to be not less than 15% and not more than 20%.

Further, in this tire, the ratio of a radial distance from a bead base line to a tire maximum width position to a tire cross-sectional height is set to be not less than 45% and not more than 49%.

Such configuration of the tire is expected to reduce passing noise while ensuring necessary wet performance.

EP 1 011 991 A1 discloses a pneumatic tire according to the preamble of claim 1. Other related tires are disclosed, for example, in EP 2 738 017 A1, JP HO7-24928 A, EP 2 927 027 A1, and DE 10 2013 106 015 A1.

### summary of the Invention

### Problems to be solved by the invention

In recent years, a hybrid vehicle which uses both an engine and an electric motor and an electric vehicle which uses only an electric motor are in widespread use. In such vehicles, noise from the vehicle body during travel has been significantly reduced. Therefore, the tires are required to be further improved in noise performance in order to reduce both vehicle exterior noise and vehicle interior noise.

The present invention has been devised in view of the actual situation as described above, and a main object of the present invention is to provide a pneumatic tire capable of reducing both vehicle exterior noise and vehicle interior noise.

### Means for solving the problems

The present invention is a pneumatic tire comprising
a tread portion,
a pair of sidewall portions,
a pair of bead portions,
a carcass extending between the paired bead portions, and an inner rubber extending between the paired bead portions on the inner side of the carcass, the tread portion comprising a tread rubber forming a ground contact surface,
wherein
   the inner rubber comprises
a first portion extending through the tread portion with a first thickness, and
a second portion extending through the pair of sidewall portions with a second thickness, and
the first thickness is larger than the second thickness,
   the tread portion has a land ratio of not less than 65%, and the loss tangent tan δ1 of the first portion at 70 degrees c is not less than the loss tangent tan δ2 of the second portion at 70 degrees C and not more than the loss tangent tan δA of the tread rubber at 30 degrees C, wherein the loss tangent tan δ is measured according to JIS-K6394 by using a dynamic viscoelasticity measuring device at a measurement temperature of 30 degrees C or 70 degrees C, an initial strain of 5 % when the measuring temperature is 30 degrees C or 10 % when the measuring temperature is 70 degrees C, an amplitude of dynamic strain of +/- 1 %, a frequency of 10 Hz, and at deformation mode: tensile.

### Effects of the Invention

By adopting the above configuration, the pneumatic tire of the present invention can reduce both vehicle exterior noise and vehicle interior noise.

### Brief description of the drawings

FIG. 1 is a cross-sectional view of a tire according to an embodiment of the present invention.
FIG. 2 is an enlarged cross-sectional view of a tread portion shown in FIG. 1.
FIG. 3 is a developed view of a ground contact surface of the tread portion shown in FIG. 1.
FIG. 4 is an enlarged cross-sectional view of a first end portion of a first portion shown in FIG. 2.
FIG. 5 is an enlarged cross-sectional view of a first portion and a second portion of another embodiment of the present invention.
FIG. 6 is an enlarged cross-sectional view of a first portion and a second portion of yet another embodiment of the present invention.
FIG. 7 is an enlarged cross-sectional view of a sidewall portion of still another embodiment of the present invention.
FIG. 8 is an enlarged perspective view of the sidewall portion shown in FIG. 1.
FIG. 9 is an enlarged perspective view of area A shown in FIG. 8.
FIG. 10 is a cross-sectional view taken along the longitudinal direction of a groove shown in FIG. 9.
FIG. 11 is a cross-sectional view perpendicular to the longitudinal directions of the grooves and ridges of FIG. 9.
FIG. 12 is an enlarged cross-sectional view of a bead portion when the tire is mounted on a regular rim.

### Detailed description of the Invention

An embodiment of the present invention will be described below in conjunction with accompanying drawings.

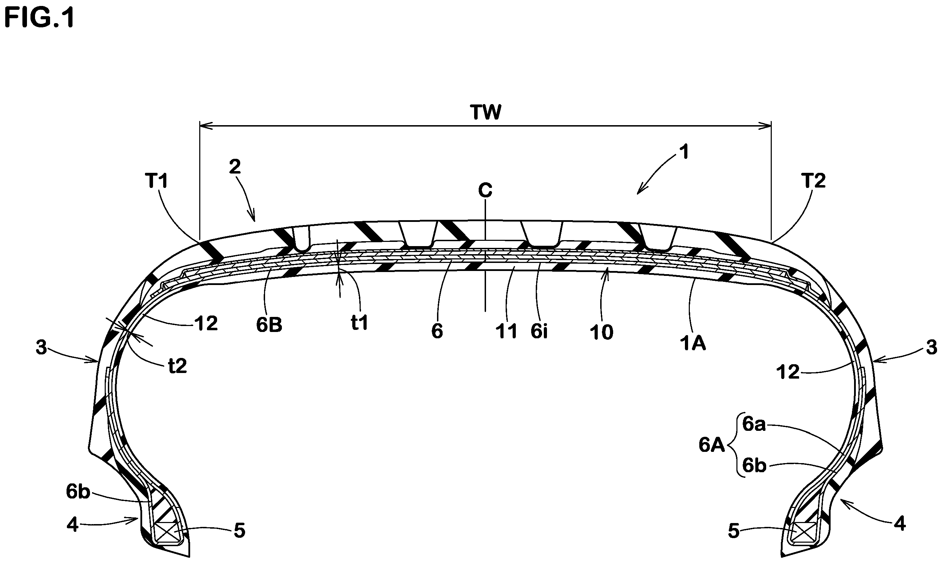

FIG. 1 shows a cross-sectional view of a tire 1 showing an embodiment of the present invention (hereinafter sometimes simply referred to as the "tire 1").

FIG. 1 is a transverse cross-sectional view of the tire 1 under its normal state, including the rotational axis of the tire.

As shown in FIG. 1, the tire 1 of the present embodiment is, for example, suitably used as a pneumatic tire for passenger cars. The present invention is however, not limited to such embodiment, and may be applied to heavy duty pneumatic tires, for example.

In the case of pneumatic tires for which various standards are specified, the normal state means a state of the tire which is mounted on a regular rim, inflated to a normal internal pressure, and loaded with no tire load.

In the case of tires for which various standards are not yet established, the normal state means a standard usage state of the tire according to the purpose of use of the tire, in which the tire is not mounted on the vehicle and no load is applied.

In this specification, dimensions of each portion of the tire refer to values measured under the normal state unless otherwise noted.

In the case of a structure which is difficult to measure under the normal state (for example, an internal structural portion of the tire 1), its dimension is a value measured with the tire 1 put under a state that approximates the normal state as much as possible.

The regular rim is a wheel rim specified for the tire in a standard system including standards on which the tire is based, for example, "Standard Rim" in the case of JATMA, "Design Rim" in the case of TRA, and "Measuring Rim" in the case of ETRTO.

The normal internal pressure is air pressure specified for the tire in a standard system including standards on which the tire is based, for example, "Maximum Air Pressure" in the case of JATMA, the maximum value listed in the table "TIRE LOAD LIMITS AT VARIOUS COLD INFLATION PRESSURES" in the case of TRA, and "Inflation Pressure" in the case of ETRTO.

The tire 1 comprises a tread portion 2, a pair of sidewall portions 3, and a pair of bead portions 4.

The sidewall portion 3 is connected to the tread portion 2 on the outside in the tire axial direction and extends in the tire radial direction.

The bead portion 4 is connected to the inner side in the tire radial direction of the sidewall portion 3.

Further, the tire 1 comprises a carcass 6 and an inner rubber 10. The carcass 6 extends between the paired bead portions 4. In other words, the carcass 6 extends from one of the bead portions 4 through one of the sidewall portions 3, the tread portion 2, and the other of the sidewall portions 3, to the other of the bead portions 4.

The inner rubber 10 is disposed inside the carcass 6 and extends between the paired bead portions 4. Thereby, the inner rubber 10 forms a tire inner cavity surface 1A.

The inner rubber 10 is made of vulcanized rubber, and is different from a puncture sealant material.

The carcass 6 is, for example, composed of a single carcass ply 6A.

The carcass ply 6A comprises, for example, a main body portion 6a and turnup portions 6b.

The main body portion 6a extends, for example, between the paired bead portions 4.

The turnup portion 6b is, for example, connected to the main body portion 6a and folded back around a bead core 5 from the inside to the outside in the tire axial direction.

The carcass ply 6A comprises a plurality of carcass cords and a topping rubber covering them (not shown).

As the carcass cords, organic fiber cords such as aramid and rayon are used.

It is desirable that the carcass cords are, for example, arranged at an angle of 70-90 degrees with respect to the tire equator C.

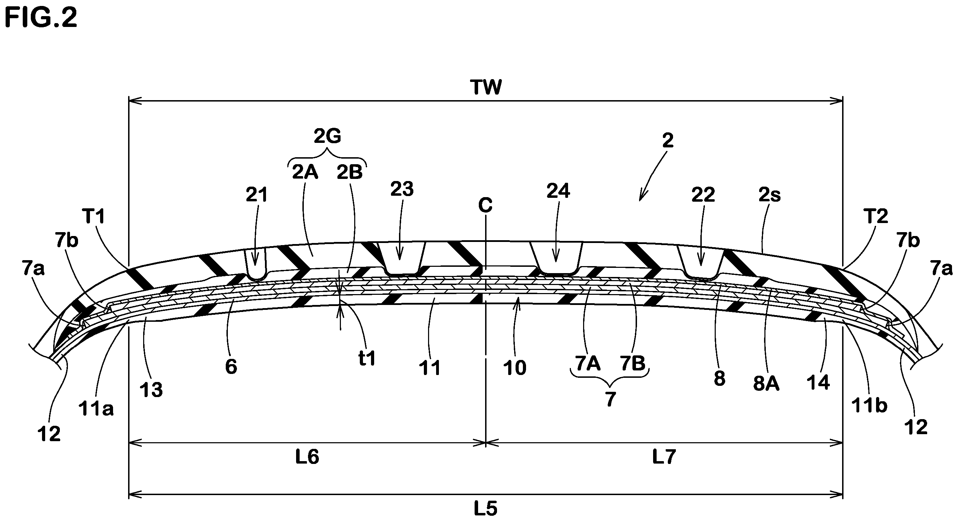

FIG. 2 shows an enlarged cross-sectional view of the tread portion 2 shown in FIG. 1.

As shown in FIG. 2, the tread portion 2 of the present embodiment comprises, for example, a belt layer 7 and a band layer 8 which are arranged outside the carcass 6 in the tire radial direction. However, the tread portion 2 is not limited to such embodiment.

The belt layer 7 comprises a first belt ply 7A adjacent to the carcass 6 and a second belt ply 7B disposed outside the first belt ply 7A in the tire radial direction.

Each of the first belt ply 7A and the second belt ply 7B comprises a plurality of belt cords arranged at an angle of 15 to 45 degrees with respect to the tire circumferential direction, and a topping rubber covering the belt cords.

The belt cords of the first belt ply 7A and the belt cords of the second belt ply 7B are inclined in opposite directions to each other with respect to the tire circumferential direction. Thereby, the tread portion 2 is effectively reinforced.

It is desirable that a length in the tire axial direction of the second belt ply 7B is smaller than a length in the tire axial direction of the first belt ply 7A. Thereby, the outer end 7b in the tire axial direction of the second belt ply 7B is located inward in the tire axial direction of the axially outer end 7a of the first belt ply 7A.

The band layer 8 is composed of, for example, a single band ply 8A.

The band ply 8A comprises, for example, a band cord arranged at an angle of not more than 5 degrees with respect to the tire circumferential direction, and a topping rubber covering the band cord.

The band layer 8 of the present embodiment is arranged so as to cover the entire belt layer 7.

As shown in FIG. 1, the inner rubber 10 comprises a first portion 11 and a second portion 12.

The first portion 11 extends through the tread portion 2 with a first thickness t1.

The second portion 12 extends through the pair of sidewall portions 3 with a second thickness t2.

The first thickness t1 and the second thickness t2 mean the thickness from the inner surface 6i of the carcass 6 to the tire inner cavity surface 1A, and the thickness of the topping rubber of the carcass ply 6A is not included.

In the present invention, the first thickness t1 is larger than the second thickness t2. This means that an average value of the first thickness t1 is larger than an average value of the second thickness t2.

Here, the average value of the first thickness t1 is a value obtained by dividing the cross-sectional area of the first portion 11 in the tire meridian cross section by the length of the first portion 11 along the tire inner cavity surface 1A.

The average value of the second thickness t2 is a value obtained in the same manner.

In the present embodiment, as a desirable aspect, the above-described thickness relationship is maintained over the entire circumference of the tire. The present invention is however, not limited to such aspect.

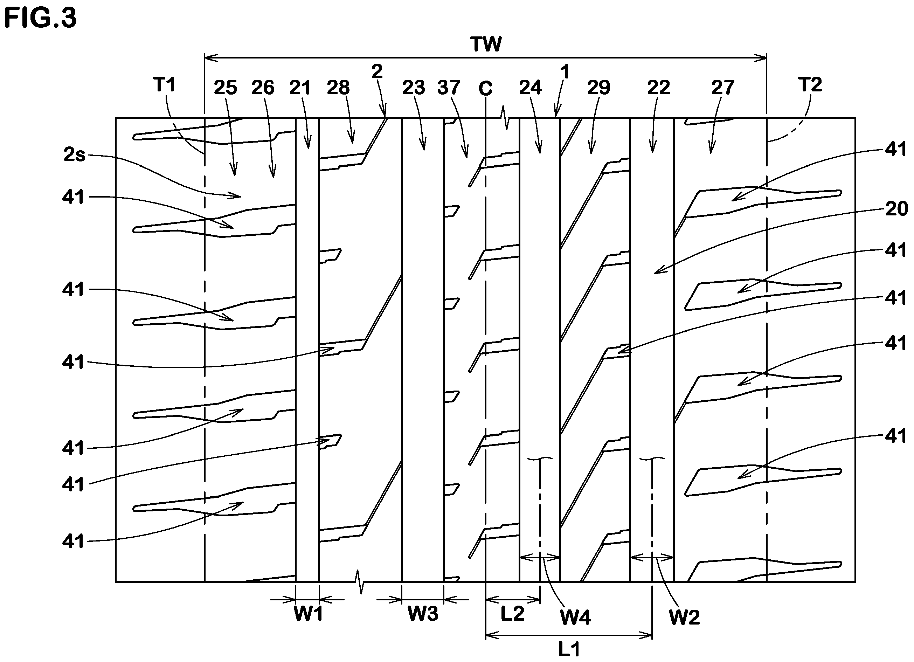

FIG. 3 shows a developed view of the ground contact surface 2s of the tread portion 2 shown in FIG. 1.

The ground contact surface 2s of the tread portion 2 corresponds to a surface between a first tread edge T1 and a second tread edge T2 of the outer surface of the tread portion 2.

Each of the first tread edge T1 and the second tread edge T2 corresponds to the outermost ground contact position in the tire axial direction of the tread portion 2 when the tire 1 under its normal state is placed on a horizontal flat surface at a camber angle of 0 degrees and loaded by 70% of the normal load.

In the case of pneumatic tires for which various standards have been established, the normal load is a tire load specified for the tire in a standard system including standards on which the tire is based, for example, "Maximum Load Capacity" in the case of JATMA, the maximum value listed in the table "TIRE LOAD LIMITS AT VARIOUS COLD INFLATION PRESSURES" in the case of for TRA, and "Load Capacity" in the case of ETRTO.

In the case of tires for which various standards are not yet established, the normal load refers to the maximum tire load that can be applied to the tire when using the tire.

In the present invention, the land ratio of the tread portion 2 is 65% or more.

In this specification, the land ratio means a ratio Sb/Sa of the total actual ground contact area Sb to the total area Sa of the virtual grand contact surface in which all the grooves and sipes existing in the ground contact surface 2s of the tread portion 2 are filled.

The land ratio is preferably not less than 70%, more preferably not less than 75%, and preferably not more than 85%, more preferably not more than 80%.

In the present invention, both the vehicle exterior noise and vehicle interior noise can be reduced by adopting the above configuration. The reason is as follows.

It has been known that, generally, when the land ratio of the tread portion is decreased, the pattern noise increases and vehicle exterior noise increases.

On the other hand, it has been known that, when the land ratio is increased, the pattern noise is reduced, but the vibration from the road surface is more likely to be transmitted to the vehicle through the tire, resulting in an increase in vehicle interior noise.

For this reason, conventional tires are often designed with a relatively small land ratio (less than 65%).

By setting the land ratio to 65% or more, the tire 1 of the present invention is reduced in pattern noise, and as a result, it is possible to reduce the vehicle exterior noise.

In the tire 1 of the present invention, as the first thickness t1 (shown in FIG. 1) of the first portion 11 is large as described above, the tread portion 2 can effectively absorb vibrations from the road surface, and the vehicle interior noise can be reduced even if the land ratio of the tread portion 2 is large.

For this reason, the present invention can reduce both the vehicle exterior noise and vehicle interior noise.

A more detailed configuration of the present embodiment will be described below.

Each configuration described below represents a specific aspect of the present embodiment, therefore, the present invention can exhibit the above-described effects even if it does not have the configuration described below.

Further, even if any one of the configurations described below is applied alone to the tire of the present invention having the features described above, it is possible to expect an improvement in performance according to the adopted configuration.

Furthermore, when some of the configurations described below are applied in combination, it is possible to expect a combined improvement in performance according to the respective configurations.

In the tire 1 of the present embodiment, for example, the tire mounting direction to a vehicle is specified. According thereto, the first tread edge T1 is positioned outward of the vehicle when the tire is attached to the vehicle. The second tread edge T2 is positioned inward of the vehicle when the tire is attached to the vehicle.

The direction of tire attachment to the vehicle is indicated, for example, by characters or symbols on the outer surface of the sidewall portion 3 (shown in FIG. 1).

The tire 1 of the present invention is however, not limited to such aspect, and may be one for which the tire mounting direction to a vehicle is not specified.

As shown in FIG. 3, the tread portion 2 of the present embodiment comprises a plurality of circumferential grooves 20 continuously extending in the tire circumferential direction between a first tread edge T1 and a second tread edge T2, and a plurality of land portions 25 divided by the circumferential grooves 20.

In the tire 1 of the present embodiment, the tread portion 2 is divided into five land portions 25 by four circumferential grooves 20. The present invention is however, not limited to such aspect.

The plurality of circumferential grooves 20 includes a first shoulder circumferential groove 21, a second shoulder circumferential groove 22, a first crown circumferential groove 23 and a second crown circumferential groove 24.

The first shoulder circumferential groove 21 is disposed between the first tread edge T1 and the tire equator C. And in the present embodiment, it is disposed closest to the first tread edge T1 among the plurality of circumferential grooves 20.

The second shoulder circumferential groove 22 is disposed between the second tread edge T2 and the tire equator C. And in the present embodiment, it is disposed closest to the second tread edge T2 among the plurality of circumferential grooves 20. The first crown circumferential groove 23 is disposed between the first shoulder circumferential groove 21 and the tire equator C.

The second crown circumferential groove 24 is disposed between the second shoulder circumferential groove 22 and the tire equator C.

It is desirable that a distance L1 in the tire axial direction from the tire equator C to the groove center line of each of the first shoulder circumferential groove 21 and the second shoulder circumferential groove 22 is, for example, 25% to 35% of the tread width TW.

It is desirable that a distance L2 in the tire axial direction from the tire equator C to the groove center line of each of the first crown circumferential groove 23 and the second crown circumferential groove 24 is, for example, 5% to 15% of the tread width TW.

Here, the tread width TW is the distance in the tire axial direction from the first tread edge T1 to the second tread edge T2 under the normal state.

Each of the circumferential grooves 20 of the present embodiment extends, for example, linearly in parallel with the tire circumferential direction.

Each of the circumferential grooves 20 may, for example, extend in a wavy shape.

It is desirable that the groove width of each of the circumferential grooves 20 is at least 3 mm or more.

Further, it is desirable that the groove width of each of the circumferential grooves 20 is, for example, 4.0% to 8.5% of the tread width TW.

Additionally, the total groove width of the plurality of circumferential grooves 20 is, for example, 20% to 30%, preferably 20% to 25% of the tread width TW.

Thereby, it is possible to improve steering stability on dry roads while reducing the vehicle exterior noise.

It is desirable that the groove width w3 of the first crown circumferential groove 23 is, for example, more than the groove width w1 of the first shoulder circumferential groove 21. specifically, the groove width w3 is 150% to 200% of the groove width w1.

It is desirable that the groove width w4 of the second crown circumferential groove 24 is, for example, more than the groove width w2 of the second shoulder circumferential groove 22. specifically, the groove width w4 is not more than 140%, preferably 105% to 120% of the groove width w2.

In a more desirable aspect, the first shoulder circumferential groove 21 has a smallest groove width among the plurality of circumferential grooves 20. This makes it difficult for the noise generated by the circumferential grooves 20 to diffuse toward the outside of the vehicle while ensuring wet performance, therefore, the vehicle exterior noise can be reduced.

It is desirable that, in the case of pneumatic tires for passenger cars, the depth of each of the circumferential grooves 20 is, for example, 5 to 10 mm.

The plurality of land portions 25 includes a crown land portion 37, a first middle land portion 28, a second middle land portion 29, a first shoulder land portion 26 and a second shoulder land portion 27.

The crown land portion 37 is defined between the first crown circumferential groove 23 and the second crown circumferential groove 24.

The first middle land portion 28 is defined between the first shoulder circumferential groove 21 and the first crown circumferential groove 23, therefore, the first middle land portion 28 is adjacent to the crown land portion 37 via the first crown circumferential groove 23.

The second middle land portion 29 is defined between the second shoulder circumferential groove 22 and the second crown circumferential groove 24, therefore, the second middle land portion 29 is adjacent to the crown land portion 37 via the second crown circumferential groove 24.

The first shoulder land portion 26 includes the first tread edge T1 and is defined on the outer side in the tire axial direction of the first shoulder circumferential groove 21, therefore, the first shoulder land portion 26 is adjacent to the first middle land portion 28 via the first shoulder circumferential groove 21.

The second shoulder land portion 27 includes the second tread edge T2 and is defined on the outer side in the tire axial direction of the second shoulder circumferential groove 22, therefore, the second shoulder land portion 27 is adjacent to the second middle land portion 29 via the second shoulder circumferential groove 22.

These land portions 25 are each provided with a plurality of lateral grooves 41. The arrangement of the lateral grooves 41 shown in FIG. 3 is merely an example, and the present invention is not limited to such example.

It is desirable that the first middle land portion 28 is not divided in the tire circumferential direction by grooves whose widths are 2 mm or more.

similarly, it is desirable that the crown land portion 37 and the second middle land portion 29 are not divided in the tire circumferential direction by grooves whose widths are 2 mm or more.

Thereby, the pattern noise generated by these land portions is reduced, and the vehicle exterior noise can be reduced.

It is desirable that the land ratio Lac of the crown land portion 37 is more than the land ratio Lam1 of the first middle land portion 28. specifically, the land ratio Lac is more than 105%, preferably 106% or more but less than 120%, of the land ratio Lam1.

Thereby, the pattern noise generated by the crown land portion 37 can be reduced, and further, the steering stability and wear resistance performance on dry roads can be enhanced.

It is desirable that the land ratio Lam1 of the first middle land portion 28 is more than the land ratio Las1 of the first shoulder land portion 26. specifically, the land ratio Lam1 is more than 105% of the land ratio Las1, specifically 106% or more but less than 120%. Thereby, it is possible further enhance the steering stability and wear resistance on dry roads.

From a similar point of view, it is desirable that the land ratio Lam2 of the second middle land portion 29 is more than the land ratio Las2 of the second shoulder land portion 27. specifically, the land ratio Lam2 is more than 105% of the land ratio Las2, specifically 106% or more but less than 120%.

As shown in FIG. 2, the first portion 11 comprises a first end portion 13 on the first tread edge T1 side and a second end portion 14 on the second tread edge T2 side.

In the first end portion 13, the first thickness t1 continuously decreases toward an outer end 11a on the first tread edge T1 side, of the first portion 11.

In the second end portion 14, the first thickness t1 continuously decreases toward an outer end 11b on the second tread edge T2 side, of the first portion 11.

In the present embodiment, the position at which the decreasing of the first thickness t1 is end, corresponds to the outer end 11a of the first portion 11 in the tire axial direction.

From the viewpoint of reliably reducing the vehicle interior noise, the outer end 11a on the first tread edge T1 side of the first portion 11 of the present embodiment is, for example, positioned closer to the first tread edge T1 than the first crown circumferential groove 23, more desirably closer to the first tread edge T1 than the first shoulder circumferential groove 21.

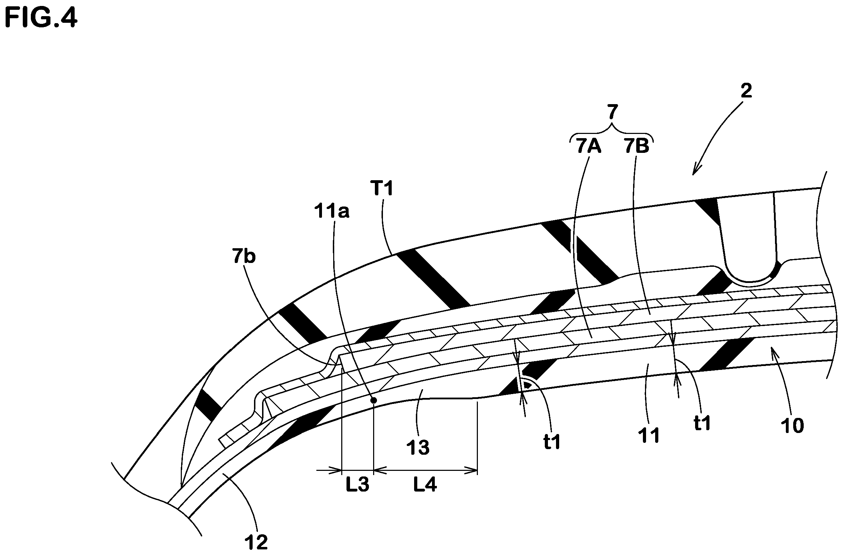

In FIG. 4, there is shown an enlarged cross-sectional view of the first end portion 13 of the first portion 11.

As shown in FIG. 4, it is desirable that the outer end 11a of the first portion 11 on the first tread edge T1 side is located at the same position in the tire axial direction as the outer end 7b in the tire axial direction of the second belt ply 7B, or on the inner side in the tire axial direction of the outer end 7b of the second belt ply 7B.

In a more desirable aspect, the distance L3 in the tire axial direction between the outer end 11a of the first portion 11 and the outer end 7b of the second belt ply 7B is not more than 10 mm.

Thereby, the deformation of a portion around the outer end 11a of the first portion 11 during running of the tire can be suppressed by the belt layer 7 while securing a sufficient length in the tire axial direction of the first portion 11, and as a result, separation of the inner rubber 10 around the outer end 11a can be suppressed.

The first end portion 13 is connected to a portion extending with a constant first thickness t1 on the tire equator C side (shown in FIG. 1).

The length L4 in the tire axial direction of the first end portion 13 is 2.0% to 4.0% of the tread width Tw (shown in FIG. 1).

Thereby, the thickness of the inner rubber 10 can be prevented from abruptly changing, and damage such as separation of the inner rubber 10 can be suppressed.

As shown in FIG. 2, the first portion 11 has the same configuration on the second tread edge T2 side as that on the first tread edge T1 side.

That is, the outer end 11b of the first portion 11 on the second tread edge T2 side is, for example, located on the second tread edge T2 side of the second crown circumferential groove 24, more preferably on the second tread edge T2 side of the second shoulder circumferential groove 22.

It is desirable that the outer end 11b of the first portion 11 on the second tread edge T2 side is located

at the same position in the tire axial direction as the outer end 7b in the tire axial direction of the second belt ply 7B, or on the inside in the tire axial direction of the outer end 7b of the second belt ply 7B.

Further, the distance in the tire axial direction between the outer end 11b of the first portion 11 and the outer end 7b of the second belt ply 7B is 10 mm or less.

The second end portion 14 also has the same configuration as the first end portion 13.

It is desirable that a length L5 in the tire axial direction of the first portion 11 in the present embodiment is set to 90% to 110% of the tread width Tw by arranging the outer ends 11a and 11b of the first portion 11 as described above. Thereby, it is possible to reliably reduce the vehicle interior noise while suppressing an increase in tire weight.

In the first portion 11 of the present embodiment, a first length L6 from the tire equator C to the outer end 11a on the first tread edge T1 side, is substantially the same as a second length L7 from the tire equator C to the outer end 11b on the second tread edge T2 side.

More specifically, the difference between the first length L6 and the second length L7 is not more than 5% of the first length L6.

Thereby, it is possible to improve uniformity of the tire.

In another embodiment, for example, the second length L7 may be larger than the first length L6. Specifically, the second length L7 is 105% to 110% of the first length L6. In such embodiment, the length of the first portion 11 is sufficiently secured on the second tread edge T2 side which is inward of a vehicle when the tire is attached to the vehicle, so it is possible to further reduce the vehicle interior noise.

The first portion 11 extends between the first end portion 13 and the second end portion 14 while keeping the constant first thickness t1. Thereby, the first thickness t1 is substantially the same at the position of the tire equator C and at positions on the first tread edge T1 side of the first shoulder circumferential groove 21.

In a desirable aspect, the first thickness t1 is substantially the same from the position of the tire equator C to a position beyond the first shoulder circumferential groove 21.

Here, the term "substantially the same" means that inevitable errors in rubber products such as tires are allowable, and it shall comprise an aspect in which the difference between the maximum value and minimum value of the thickness is not more than 5% of the maximum value.

In the first portion 11, the region having the constant first thickness t1 may be extended to the first tread edge T1. That is, from the position of the tire equator C to a position of the first tread edge T1 (an imaginary line extending parallel to the tire radial direction through the first tread edge T1), the first thickness t1 may be substantially the same.

In this case, the outer end 11a of the first portion 11 is located on the outer side in the tire axial direction of the first tread edge T1. such embodiment can further reduce the vehicle interior noise.

It is desirable that, also between the tire equator C and the second tread edge T2, the first portion 11 has the same configuration as described above. That is, the first thickness t1 is substantially the same at the position of the tire equator C and at positions on the second tread edge T2 side of the second shoulder circumferential groove 22.

In a desirable aspect, the first thickness t1 is substantially the same from the position of the tire equator C to a position beyond the second shoulder circumferential groove 22.

In another embodiment, the first portion 11 may have a region extending to the second tread edge T2 while keeping the constant first thickness t1.

It is desirable that the average value of the first thickness t1 is 1.5 to 3.5 times the average value of the second thickness t2 (shown in FIG. 1, and the same in the following). specifically, the average value of the first thickness t1 is preferably not less than 1.5 times, more preferably not less than 1.75 times, even more preferably not less than 1.9 times, but preferably not more than 3.5 times, more preferably not more than 2.7 times, even more preferably not more than 2.2 times of the average value of the second thickness t2.

Thereby, it is possible to reliably reduce the vehicle interior noise while suppressing an increase in the weight of the tire 1.

From a similar point of view, the average value of the first thickness t1 is preferably not less than 2.0 mm, more preferably not less than 2.5 mm, but preferably not more than 4.5 mm, more preferably not more than 4.0 mm, even more preferably not more than 3.5 mm.

On the other hand, the average value of the second thickness t2 is, for example, more than 0.5 mm, and not more than 2.0 mm.

In a desirable aspect, the average value of the second thickness t2 is 1.0-1.5 mm.

The second portion 12 of the present embodiment is connected to the first portion 11 and extends to the bead portion 4 (shown in FIG. 1), and the second thickness t2 is constant throughout. The second portion 12 is however, not limited to such aspect.

As shown in FIG. 2, the first portion 11 and the second portion 12 of the inner rubber 10 are made of an air impermeable rubber material. As such a rubber material, for example, a butyl-based rubber material or halogenated butyl-based rubber material van be employed.

In the present embodiment, the first portion 11 and the second portion 12 are made of the same rubber material.

However, the present invention is not limited to such aspect.

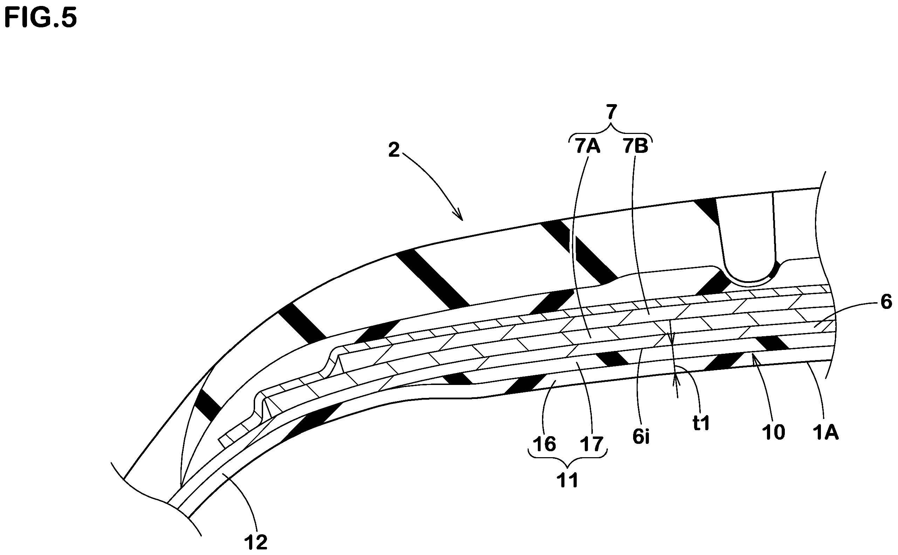

FIG. 5 shows an enlarged cross-sectional view of the first portion 11 and the second portion 12 of another embodiment of the present invention.

As shown in FIG. 5, the first portion 11 of the inner rubber 10 of the present embodiment comprises
an inner liner layer 16 made of an air-impermeable rubber material (hereinafter referred to as the first rubber material), and
an additional layer 17 disposed between the inner liner layer 16 and the carcass 6.

The additional layer 17 is made of a second rubber material different from the first rubber material.

As the second rubber material, for example, a rubber material having air permeability is employed.

That is, the first portion 11 of the present embodiment is formed by combining the air-impermeable rubber material and the air-permeable rubber material.

In the present embodiment, as the first portion 11 includes the additional layer 17, it is possible to improve various performances.

For example, as the second rubber material forming the additional layer 17, a rubber material having a loss tangent tan δ larger than that of the first rubber material forming the inner liner layer 16 may be employed. In this case, the tread portion 2 can further absorb vibrations from the road surface, and the vehicle interior noise can be further reduced.

Here, the loss tangent tan δ is measured according to JIS-K6394 by using a viscoelastic spectrometer under the following conditions:
Initial strain: 5%
Amplitude: +/-1%
Frequency: 10 Hz
Deformation Mode: Tensile
Measuring temperature: 70 degrees C

The arrangement position of the additional layer 17 is not limited to the embodiment shown in FIG. 5.

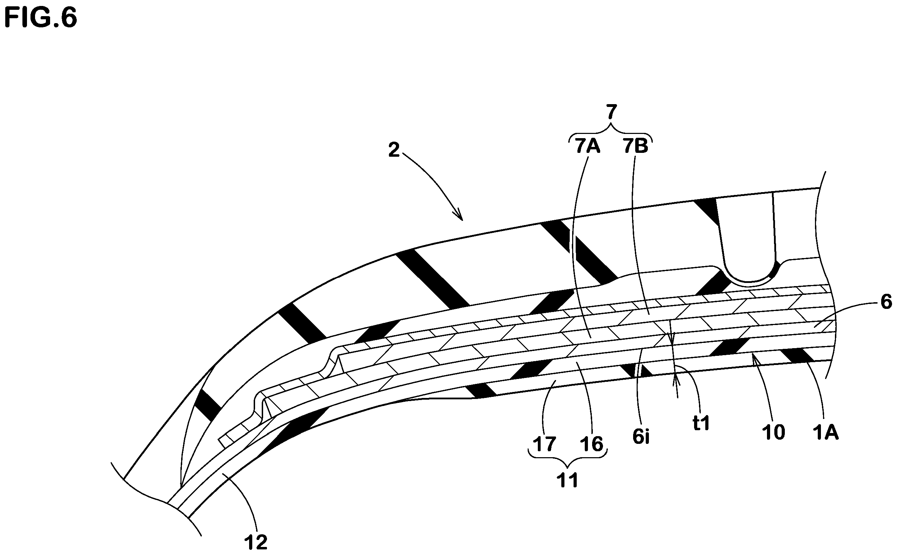

FIG. 6 shows an enlarged cross-sectional view of the first portion 11 and the second portion 12 of yet another embodiment of the present invention.

As shown in FIG. 6, the additional layer 17 may be arranged inside the inner liner layer 16 in the tire radial direction. Moreover, the additional layer 17 may constitute a part of the tire inner cavity surface 1A.

As shown in FIG. 5 and FIG. 6, even when the first portion 11 of the inner rubber 10 comprises the additional layer 17, the first thickness t1 corresponds to the thickness from the inner surface 6i of the carcass 6 in the tread portion 2 to the tire inner cavity surface 1A.

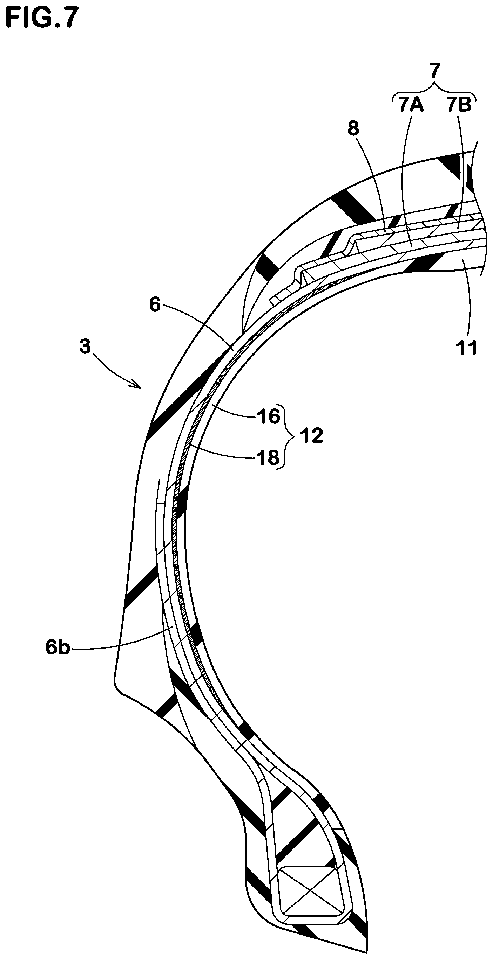

In FIG. 7, there is shown an enlarged cross-sectional view of the sidewall portion 3 of another embodiment of the present invention.

As shown in FIG. 7, the second portion 12 of the present embodiment comprises
an inner liner layer 16 made of an air impermeable first rubber material, and
an intermediate layer 18 disposed between the inner liner layer 16 and the carcass 6.

In FIG. 7, the intermediate layer 18 is dotted.

The intermediate layer 18 is made of a rubber material different from the first rubber material.

The intermediate layer 18 may be made of, for example, the same second rubber material as the additional layer 17 of the first portion 11 described with reference to FIG. 5 and FIG. 6.

As a result of the second portion 12 including such intermediate layer 18, it is possible to further suppress the transmission of vibrations generated in the tread portion 2 to the vehicle.

It may be possible that the intermediate layer 18 is made of a rubber material different from the first rubber material and the second rubber material.

The intermediate layer 18 is, for example, overlapped with the band layer 8 in the tire axial direction.

In a desirable aspect, the intermediate layer 18 is overlapped with the belt layer 7 in the tire axial direction.

The intermediate layer 18 may be continuous with the first portion 11 of the inner rubber 10.

In addition, it is desirable that the intermediate layer 18 extends to the inner side in the tire radial direction than the outer end in the tire radial direction of the turnup portion 6b of the carcass 6.

such intermediate layer 18 helps to further reduce the vehicle interior noise.

As shown in FIG. 2, the tread portion 2 of the present embodiment comprises a tread rubber 2G which forms the ground contact surface 2s.

The tread portion 2 includes, for example, a cap rubber 2A forming the ground contact surface 2s, and a base rubber 2B disposed inside the cap rubber 2A in the tire radial direction. The tread portion 2 is not limited to such example, and may be composed of, for example, a single layer of a rubber material, or three or more layers of rubber materials.
when the tread portion 2 is composed of a plurality of rubber materials, the tread rubber 2G is the rubber material forming the ground contact surface 2s, for example, the cap rubber 2A.

In the present embodiment, the loss tangent tan δ1 of the first portion 11 at 70 degrees C is larger than or equal to the loss tangent tan δ2 of the second portion 12 at 70 degrees C. such first portion 11 is useful for suppressing vibrations of the tread portion 2, and can improve the noise performance of the tire 1.

It is desirable that the loss tangent tan δ1 of the first portion 11 at 70 degrees C is less than or equal to the loss tangent tan δA of the tread rubber 2G at 30 degrees C The tread rubber 2G forming the ground contact surface 2s is cooled by contacting with the outside air, so the measured temperature is set at 30 degrees C

such first portion 11 can further reduce the influence of the tread portion 2 on the rolling resistance, and is useful for improving the fuel efficiency performance of the tire 1. Therefore, the tire 1 of the present embodiment can achieve both the noise performance and low fuel consumption performance. Here, the loss tangent tan δ is measured according to JIS-K6394 by using a dynamic viscoelasticity measuring device under the following conditions.
Measurement temperature: 30 degrees C or 70 degrees C
Initial strain: 5% when measuring temperature is 30 degrees C or 10% when measuring temperature is 70 degrees C
Amplitude of dynamic strain: +/-1%
Frequency: 10 Hz
Deformation Mode: Tensile

The rubber sample for measuring the loss tangent tan δ is taken out from the vulcanized tire 1 so that the longitudinal direction of the sample coincides with the circumferential direction of the tire 1.

The same applies to the loss tangent tan δ of each portion described below.

Incidentally, the loss tangent tan δ can be adjusted by appropriately changing the glass transition point Tg of the rubber composition and/or the types and amounts of various compounding agents.

For example, it is possible to increase the loss tangent tan δ by
increasing the glass transition point Tg of the rubber composition,
decreasing the average particle size of reinforcing agents such as carbon and silica,
increasing the amount of reinforcing agent, and/or decreasing the amount of vulcanizing agent such as sulfur and accelerators.

Here, when the first portion 11 is made of a single rubber material, the loss tangent tan δ1 of the first portion 11 is that of the single rubber material.
when the first portion 11 is composed of a plurality of rubber materials, the loss tangent tan δ1 of the first portion 11 is a weighted average obtained by weighting the loss tangent tan δ1 values of the rubber materials by the cross-sectional areas of the respective rubber materials.

The same applies to the loss tangents tan δ of other portion.

As a more desirable aspect, the loss tangent tan δ1 of the first portion 11 is 1.0 to 2.0 times the loss tangent tan δ2 of the second portion 12.

As the loss tangent tan δ1 of the first portion 11 is not less than 1.0 times the loss tangent tan δ2 of the second portion 12, the vibration suppressing effect of the tread portion 2 can be achieved reliably.

From this point of view, the loss tangent tan δ1 of the first portion 11 is more desirably not less than 1.1 times the loss tangent tan δ2 of the second portion 12.

As the loss tangent tan δ1 of the first portion 11 is not more than 2.0 times the loss tangent tan δ2 of the second portion 12, damage such as separation due to an excessive difference in physical properties can be suppressed, and the durability performance of the tire 1 can be improved.

From this point of view, the loss tangent tan δ1 of the first portion 11 is more desirably not more than 1.5 times the loss tangent tan δ2 of the second portion 12.

The loss tangent tan δ1 of the first portion 11 is desirably 0.4 to 0.7 times the loss tangent tan δA of the tread rubber 2G.

By setting the loss tangent tan δ1 of the first portion 11 to be not less than 0.4 times the loss tangent tan δA of the tread rubber 2G, vibrations of the tread portion 2 can be reduced while maintaining the fuel efficiency of the tire 1.

As the loss tangent tan δ1 of the first portion 11 is not more than 0.7 times the loss tangent tan δA of the tread rubber 2G, vibrations of the tread portion 2 can be reduced while maintaining the steering stability performance of the tire 1.

The loss tangent tan δ1 of the first portion 11 is preferably not less than 0.14.

As the loss tangent tan δ1 of the first portion 11 is not less than 0.14, vibrations of the tread portion 2 can be reliably suppressed, and noise generation can be reduced.

From this point of view, the loss tangent tan δ1 of the first portion 11 is more preferably not less than 0.15, still more preferably not less than 0.20.

It is desirable that the loss tangent tan δ2 of the second portion 12 is equal to the loss tangent tan δ1 of the first portion 11.

In such inner rubber 10, it is possible to form the first portion 11 and the second portion 12 integrally, which helps to reduce the manufacturing cost of the tire 1.

The loss tangent tan δA of the tread rubber 2G is preferably not more than 0.30.

As the loss tangent tan δA of the tread rubber 2G is not more than 0.30, the rolling resistance is reduced, which makes it possible to improve the fuel economy performance of the tire 1. From this point of view, the loss tangent tan δA of the tread rubber 2G is more preferably 0.25 or less, still more preferably 0.20 or less.
when the tread portion 2 is composed of the cap rubber 2A and the base rubber 2B, the loss tangent tan δA of the tread rubber 2G at 30 degrees C is the loss tangent tan δA of the cap rubber 2A at 30 degrees C.

In this case, it is desirable that the loss tangent tan δB of the base rubber 2B at 70 degrees C is smaller than the loss tangent tan δA of the cap rubber 2A at 30 degrees C.

such tread portion 2 helps to improve the fuel economy performance while maintaining good steering stability performance of the tire 1.

The loss tangent tan δB of the base rubber 2B is preferably 0.21 or less.

As the loss tangent tan δB of the base rubber 2B is not more than 0.21, heat generation in the tread portion 2 during running is suppressed, which helps to maintain good fuel efficiency performance of the tire 1.

From this point of view, the loss tangent tan δB of the base rubber 2B is more preferably 0.20 or less.

The complex elastic modulus E*A of the tread rubber 2G at 30 degrees C is preferably not less than 7.8 MPa.

As the complex elastic modulus E*A of the tread rubber 2G is not less than 7.8 MPa, the vibration of the tread portion 2 is suppressed, which helps to improve the noise performance of the tire 1.

From this point of view, the complex elastic modulus E*A of the tread rubber 2G is more preferably 8.0 MPa or more, and still more preferably 9.0 MPa or more.
when the tread rubber 2G is composed of a plurality of rubber materials, the complex elastic modulus E*A is that of the rubber material which forms the ground contact surface 2s.

Here, the complex elastic modulus E* is measured according to JIS-K6394 by using a dynamic viscoelasticity measuring device under the following conditions.
Initial strain: 5%
Amplitude of dynamic strain: +/-1%
Frequency: 10 Hz
Deformation Mode: Tensile
Measuring temperature: 30 degrees C

The rubber sample for measuring the complex elastic modulus E* is taken out from the vulcanized tire 1 so that the longitudinal direction of the sample coincides with the circumferential direction of the tire 1.

Incidentally, the complex elastic modulus E* can be adjusted by appropriately changing the glass transition point Tg of the rubber composition and/or the types and amounts of various compounding agents.

For example, it is possible to increase the complex elastic modulus E* by
increasing the glass transition point Tg of the rubber composition,
decreasing the average particle size of reinforcing agents such as carbon and silica,
increasing the amount of reinforcing agents,
decreasing the total amount of plasticizers, and/or increasing vulcanizing agents such as sulfur and accelerators.

As shown in FIG. 1, the loss tangent tan δC at 70 degrees C of the topping rubber of the carcass ply 6A is preferably not more than 0.16.

As the loss tangent tan δC of the topping rubber of the carcass ply 6A is not more than 0.16, heat generation in the carcass ply 6A can be suppressed, and it becomes possible to achieve both fuel efficiency and durability of the tire 1 during high-speed running.

From this point of view, the loss tangent tan δC of the topping rubber of the carcass ply 6A is more preferably 0.15 or less. on the other hand, from the viewpoint of improving the noise performance of the tire 1, it is desirable to make the loss tangent tan δ1 of the first portion 11 more than the loss tangent tan δC of the topping rubber of the carcass ply 6A.

As shown in FIG. 2, the loss tangent tan δD at 70 degrees C of the topping rubber of the first belt ply 7A is preferably not more than 0.16.

As the loss tangent tan δD of the topping rubber of the first belt ply 7A is not more than 0.16, heat generation in the first belt ply 7A is suppressed, and it is possible to achieve both low fuel consumption performance and durability performance of the tire 1 during high-speed running.

From this point of view, the loss tangent tan δD of the topping rubber of the first belt ply 7A is more preferably 0.15 or less. on the other hand, from the viewpoint of improving the noise performance of the tire 1, it is desirable to make the loss tangent tan δ1 of the first portion 11 more than the loss tangent tan δD of the topping rubber of the first belt ply 7A.

The loss tangent tan δE at 70 degrees C of the topping rubber of the second belt ply 7B is preferably not more than 0.16.

As the loss tangent tan δE of the topping rubber of the second belt ply 7B is not more than 0.16, heat generation in the second belt ply 7B is suppressed, and it is possible to achieve both low fuel consumption performance and durability performance of the tire 1 during high-speed running.

From this point of view, the loss tangent tan δE of the topping rubber of the second belt ply 7B is more preferably 0.15 or less. on the other hand, from the viewpoint of improving the noise performance of the tire 1, it is desirable to make the loss tangent tan δ1 of the first portion 11 more than the loss tangent tan δE of the topping rubber of the second belt ply 7B.

The loss tangent tan δE of the second belt ply 7B in the present embodiment is equal to the loss tangent tan δD of the first belt ply 7A. In such belt layer 7, it is possible to uniformly manage the materials forming the first belt ply 7A and the second belt ply 7B, so the manufacturing cost of the tire 1 can be reduced.

The loss tangent tan δF at 70 degrees C of the topping rubber of the band ply 8A is preferably not more than 0.16.

As the loss tangent tan δF of the topping rubber of the band ply 8A is not more than 0.16, heat generation in the band ply 8A is suppressed, and it is possible to achieve both fuel efficiency and durability of the tire 1 during high-speed running.

From this point of view, the loss tangent tan δF of the topping rubber of the band ply 8A is more preferably 0.15 or less.

On the other hand, from the viewpoint of improving the noise performance of the tire 1, it is desirable to make the loss tangent tan δ1 of the first portion 11 more than the loss tangent tan δF of the topping rubber of the band ply 8A.

In the embodiment shown in FIG. 6, as the additional layer 17, for example, a rubber material having a loss tangent tan δ at 70 degrees C which is larger than that of the inner liner layer 16, can be employed.

In this case, the loss tangent tan δ1 of the first portion 11 is an weighted average value obtained by weighting the loss tangent tan δ of the inner liner layer 16 and the loss tangent tan δ of the additional layer 17 by the respective cross-sectional areas. The loss tangent tan δ2 of the second portion 12 corresponds to the loss tangent tan δ of the inner liner layer 16.

such additional layer 17 can more reliably reduce vibrations in the tread portion 2 and can improve the noise performance of the tire 1.

As shown in FIG. 1, in the tire 1 of the present embodiment, the twist coefficient K of the carcass cords 6B of the carcass ply 6A is set in a range from 2000 to 2500.

Here, the twist coefficient K is obtained by multiplying T by the square root of D (K=T/√D), wherein T is the number of twists per 100 mm, and D is the total fineness (dtex) of the carcass cord 6B.

It is noted that the twist coefficient K is a numerical value after the carcass cord 6B is subjected to a dipping treatment.

If a cord with a small twist coefficient K is used as the carcass cords 6B, as the cord fatigue resistance may be deteriorated, the durability of the tire 1 may be affected.

In the tire 1 of the present embodiment, as the carcass cords 6B have a twist coefficient of 2000 or more, the cord fatigue resistance is increased, and the durability performance of the tire 1 is improved.

On the other hand, if a cord with an excessive large twist coefficient K is used as the carcass cords 6B, good attenuation cannot be obtained from the sidewall portion 3 to the bead portion 4, and the noise performance of the tire 1 may be affected.

Further, the deformation of the case structure including the carcass 6 from the sidewall portion 3 to the bead portion 4 is increased, which may result in increased rolling resistance.

In the tire 1 of the present embodiment, as the twist coefficient K of the carcass cords 6B is set to 2500 or less, good attenuation is obtained from the sidewall portion 3 to the bead portion 4, therefore, noise performance of the tire 1 is improved, and the vehicle interior noise is reduced. Moreover, since the deformation of the case structure is suppressed, the rolling resistance is reduced.

In the tire 1 of the present embodiment, of the inner rubber 10, the first portion 11 extending through the tread portion 2 with the first thickness t1 larger than the second thickness t2 of the second portion 12, functions as a mass damper to suppress the vibration of the tread portion 2. Further, the vibrational energy of the tread portion 2 is attenuated by the viscoelastic properties of the rubber arranged in the first portion 11.

Therefore, as compared with a conventional pneumatic tire in which the first portion 11 is not provided, in the tire 1 of the present embodiment, acceptable levels of the twist coefficient K as the carcass cord 6B is increased.

on the other hand, the increase in rolling resistance which is a concern due to the provision of the first portion 11, can be easily solved by the carcass cords 6B having the twist coefficient K of at most 2,500.

That is, in the tire 1 of the present embodiment, by the carcass cords 6B whose twist coefficient K is optimized in accordance with the first thickness t1 of the first portion 11, it becomes possible to reduce the vehicle interior noise without increasing the rolling resistance.

The tire 1 of the present embodiment has a so-called high turnup structure in which the radially outer end of the turnup portion 6b of the carcass 6 is positioned outside the maximum width position of the tire 1 in the tire radial direction.

such carcass 6 makes it difficult for the vibration of the sidewall portion 3 to be transmitted to the bead portion 4, which makes it possible to reduce the vehicle interior noise. Further, since deformation of the case structure is suppressed from the sidewall portion 3 to the bead portion 4, rolling resistance can be easily reduced.

The tire 1 of the present embodiment may have a so-called ultrahigh turnup structure in which the radially outer end of the turnup portion 6b of the carcass 6 is positioned inward in the tire axial direction, of the outer end in the tire axial direction of the belt layer 7.

For the carcass cords 6B of the present embodiment, polyethylene terephthalate (PET) is used.

According to the load index of the tire 1, the number of carcass plies 6A and the fineness of the carcass cords 6B are desirably configured as follows.

In the tire 1 having a load index of not more than 90, there is provided a single carcass ply 6A, and the fineness of the carcass cord 6B is 1100 dtex/2.

In the tire 1 having a load index of more than 90 and not more than 100, there is provided a single carcass ply 6A, and the fineness of the carcass cord 6B is 1440 dtex/2.

In the tire 1 having a load index of more than 90 and not more than 105, there is provided a single carcass ply 6A, and the fineness of the carcass cords 6B is 1670 dtex/2.

In the tire 1 having a load index of not more than 110, there are provided two carcass plies 6A, and the fineness of the carcass cords 6B is 1110 dtex/2.

In the tire 1 having a load index of 115 or less, there are provided two carcass plies 6A, and the fineness of the carcass cords 6B is 1440 dtex/2.

In the tire 1 having a load index of 115 or less, there are provided two carcass plies 6A, and the fineness of the carcass cords 6B may be 1670 dtex/2.

In the tire 1 of the present embodiment, owing to the synergistic effect of the carcass cords 6B having a twist coefficient K of 2000 to 2500 and the rubber of the first portion 11 having the loss tangent tan δ, it becomes possible to easily reduce the vehicle interior noise without increasing rolling resistance.

As shown in FIG. 2, it is desirable that the loss tangent tan δ of the first portion 11 at 30 degrees C is 0.4 to 0.7 times the loss tangent tan δ of the base rubber 2B at 30 degrees C.

As the loss tangent tan δ of the first portion 11 is not less than 0.4 times the loss tangent tan δ of the base rubber 2B, it is possible to reduce vibrations of the tread portion 2.

As the loss tangent tan δ of the first portion 11 is not more than 0.7 times the loss tangent tan δ of the base rubber 2B, it is possible to reduce the rolling resistance of the tire.

In the tire 1 of the present embodiment, owing to the synergistic effect of the carcass cords 6B having a twist coefficient K of 2000 to 2500 and the rubber of the first portion 11 having the loss tangent tan δ, it becomes possible to more easily reduce the vehicle interior noise without increasing rolling resistance.

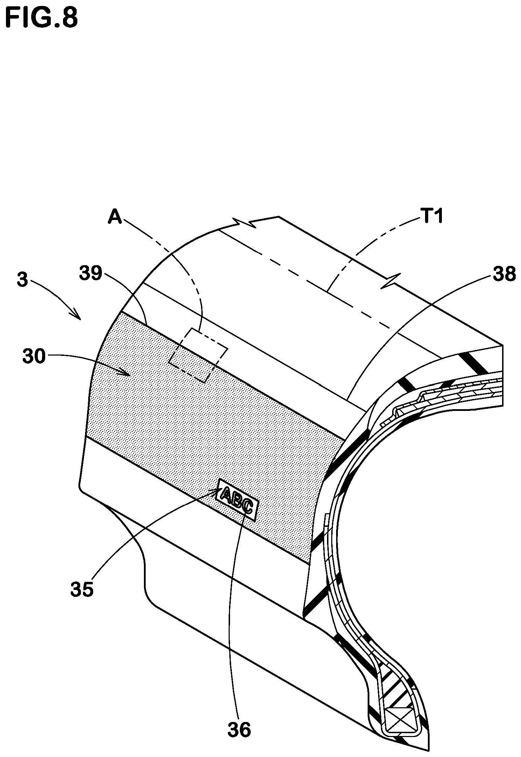

In FIG. 8, there is shown an enlarged perspective view showing the outer surface of the sidewall portion 3.

As shown in FIG. 8, in the present embodiment, the outer surface of one of or each of the paired sidewall portions 3 comprises a serration portion 30.

In the present embodiment, the outer surface of each of the paired sidewall portions 3 comprises the serration portions 30. In FIG. 8, the area where the serration portion 30 is provided is dotted.

The serration portion 30 occupies at least part of the outer surface of the sidewall portion 3.

The serration portion 30 may be arranged intermittently in the tire circumferential direction, or may be arranged continuously over the entire circumference of the tire.

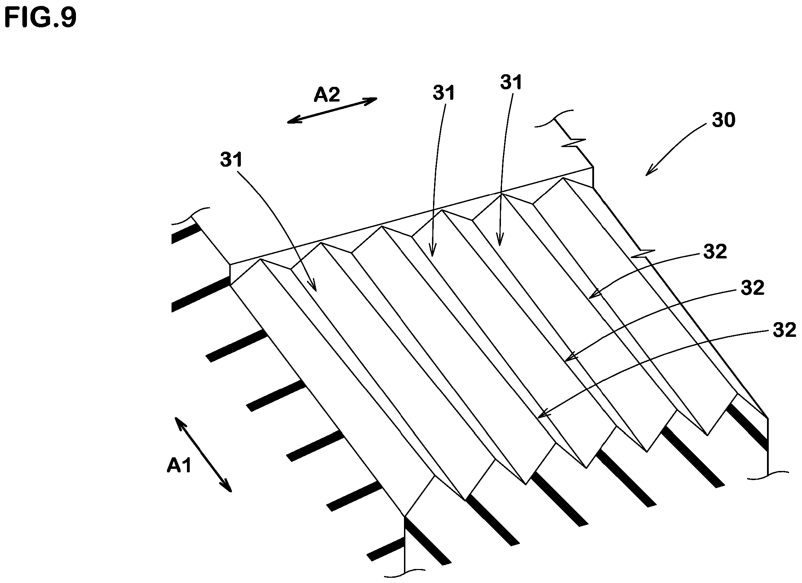

In FIG. 9, there is shown an enlarged perspective view of area A in FIG. 8. In FIG. 8, arrow A1 corresponds to the tire radial direction, and arrow A2 corresponds to the tire circumferential direction.

As shown in FIG. 9, the serration portion 30 comprises a plurality of grooves 31 extending in the tire radial direction and arranged in the tire circumferential direction, and a plurality of ridges 32 divided by the plurality of grooves 31. Each of the ridges 32 is formed between two adjacent grooves 31. The groove 31 extending in the tire radial direction means that the maximum angle of the center line of the groove 31 is less than 45 degrees with respect to the tire radial direction.

such serration portion 30 helps to make a bulge and dent of the sidewall portion 3 which are unavoidable in tire manufacturing, less noticeable.

Hereinafter, such effect may be referred to as "improved appearance performance".

On the other hand, when the vehicle is running, the serration portion 30 tends to generate noise (wind noise).

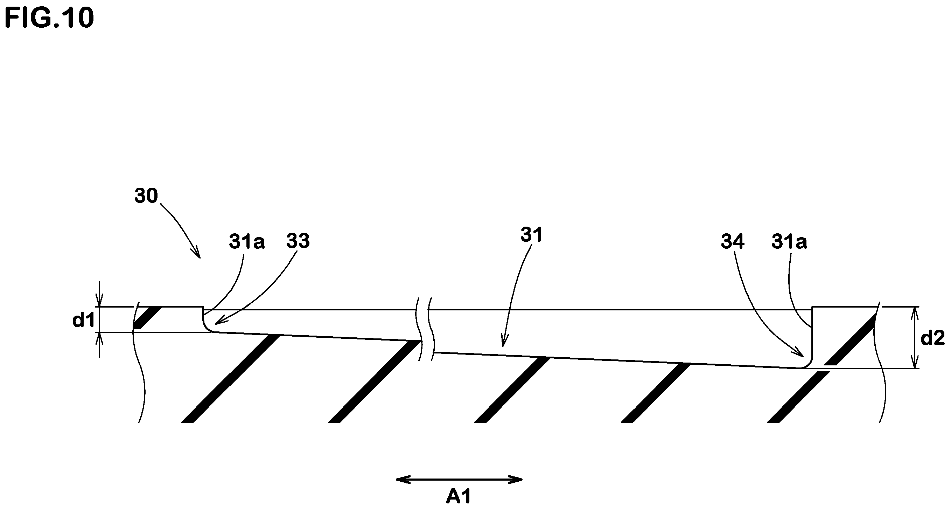

In FIG. 10, there is shown a cross-sectional view taken along the length direction of the groove 31 of the serration portion 30.

As shown in FIG. 10, each of the grooves 31 comprises an outer end portion 33 and an inner end portion 34 in the tire radial direction.

The outer end portion 33 is an end portion of the groove 31 on the tread portion 2 (shown in FIG. 1) side, and the inner end portion 34 is an end portion of the groove 31 on the bead portion 4 (shown in FIG. 1) side.

Each of the outer end portion 33 and the inner end portion 34 of the present embodiment has an inner wall 31a extending in the depth direction of the groove 31.

In the present embodiment, each of the grooves 31 has a depth d1 of not more than 0.2 mm in the outer end portion 33 thereof.

In general, when a tire sidewall portion is provided with a serration portion, due to friction between the serration portion and the air when the tire is rotating, noise (wind noise) tends to occur.
when the tire is rotating, the radially outer end portion of the groove constituting the serration portion contacts with a higher velocity of the air as compared to the other portions of the groove, and is likely to generate the noise.

In the present embodiment, as the depth of the outer end portion 33 of the groove 31 forming the serration portion 30 is 0.2 mm or less, above-said noise is reduced, and it becomes possible to reduce both the vehicle exterior noise and the vehicle interior noise.

As shown in FIG. 9, the grooves 31 and the ridges 32 of the serration portion 30 are, for example, extended linearly. The grooves 31 and the ridges 32 of the serration portion 30 are preferably extended at an angle of 15 degrees or less, more preferably 5 degrees or less with respect to the tire radial direction. The present invention is however, not limited to such aspect.

As shown in FIG. 10, it is desirable that the groove 31 is decreased in depth from the inner end portion 34 to the outer end portion 33.

In a more desirable aspect, the depth of groove 31 decreases continuously.

Therefore, the depth d2 in the inner end portion 34 constitutes the maximum depth of the groove 31.

The serration portion 30 having such grooves 31 can enhance the appearance performance and noise performance in a well-balanced manner.

Moreover, the serration portion 30 configured with such grooves 31 helps to reduce the air resistance of the tire.

The depth d2 in the inner end portion 34 is, for example, set to 0.3 mm or more.

Further, the depth d2 in the inner end portion 34 is preferably not more than 1.0 mm, more preferably not more than 0.8 mm, still more preferably not more than 0.5 mm.

Further, the depth d2 in the inner end portion 34 is preferably not less than 1.5 times, more preferably not less than 3.0 times, still more preferably not less than 5.0 times, but preferably not more than 10.0 times, more preferably not more than 9.0 times, still more preferably not more than 8.0 times the depth d1 in the outer end portion 33.

The groove 31 having such outer end portion 33 and inner end portion 34 can improve the appearance performance and noise performance in a well-balanced manner.

In a more desirable aspect, the depth d2 in the inner end portion 34 is smaller than the difference between the average value of the first thickness t1 (shown in FIG. 1) of the first portion 11 of the inner rubber 10, and the average value the second thickness t2 (shown in FIG. 1) of the second portion 12. Thereby, the vibration absorption capacity of the tread portion 2 is sufficiently increased for the noise generated by the serration portion 30, and the noise performance can be further improved.

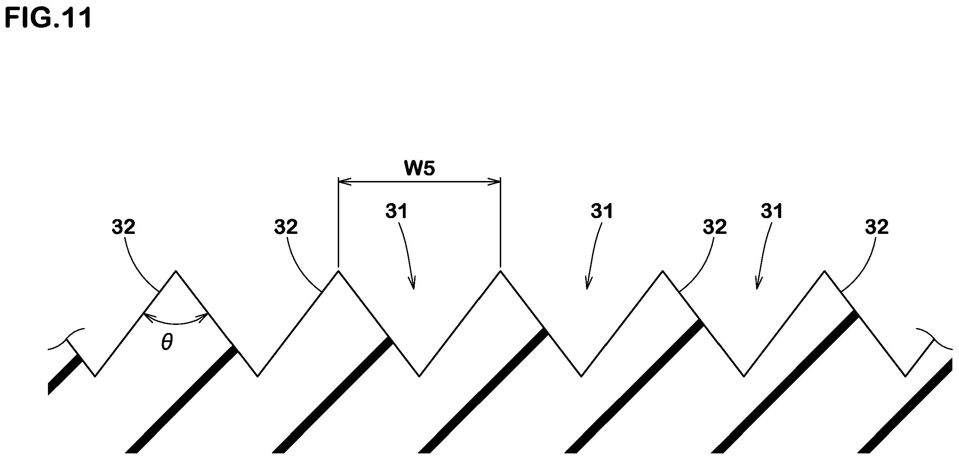

In FIG. 11, there is shown a cross-sectional view perpendicular to the longitudinal directions of the grooves 31 and ridges 32.

As shown in FIG. 11, the groove widths w5 of the grooves 31 are, for example, in a range from 0.6 to 1.8 mm. Thereby, the appearance performance and noise performance are improved in a well-balanced manner.

The cross-sectional shape of the ridge 32 is, for example, triangular.

The vertex angles θ1 of the ridges 32 are, for example, 60-90 degrees.

The cross-sectional shape of the ridge 32 is not limited to such example, and various shapes such as a trapezoidal shape and a semi-circular shape may be employed.

As shown in FIG. 8, the outer surface of the sidewall portion 3 comprises at least one emblem portion 35 including at least one letter, graphic or symbol.

In FIG. 8, as an example of the emblem portion 35, there is shown the emblem portion 35 consisting of the characters "ABC". The emblem portion 35 of the present embodiment is formed in the serration portion 30.

It is desirable that this emblem portion 35 is formed by fine grooves 36 having a depth smaller than that of the inner end portion 34 (shown in FIG. 10) of the groove 31. specifically, the depth of the fine groove 36 is, for example, 0.2 to 0.8 mm. Thereby, a contrast is generated between the emblem portion 35 and the serration portion 30, and the visibility of the emblem portion 35 can be improved.

There is a case where the outer surface of the sidewall portion 3 is provided with a stepped portion 38 extending in the tire circumferential direction with a minute height in the normal direction of the tire outer surface.

The stepped portion 38 corresponds to a split position between a tread segment and a side plate of a split type vulcanization mold.

In FIG. 8, this stepped portion is indicated by thin lines, and the height appearing in the cross section is omitted.

It is desirable for the height of the stepped portion 38 to be not more than 0.7 mm. Thereby, air resistance generated by the stepped portion 38 is reduced, and in addition to an improvement in noise performance, an improvement in fuel efficiency can be expected.

In another embodiment, the stepped portion 38 may be arranged at the boundary 39 between the serration portion 30 and other portions. Thereby, the appearance of the sidewall portion 3 can be further improved.

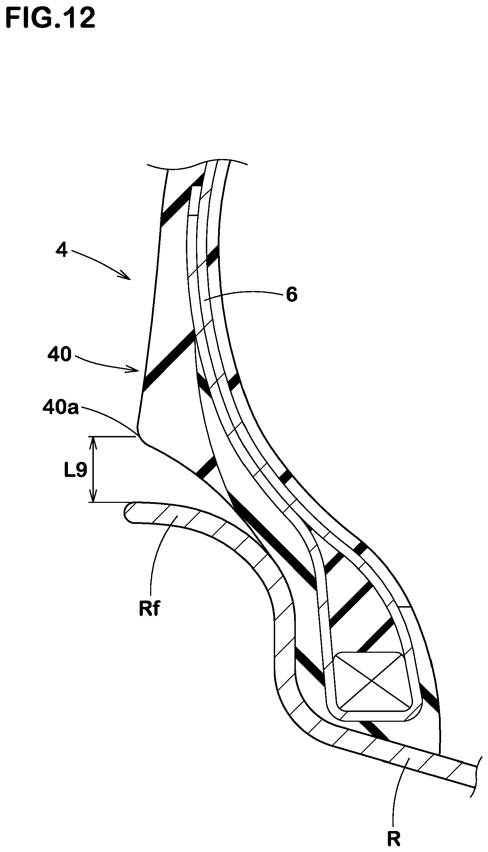

In FIG. 12, there is shown an enlarged view of the bead portion 4 of the tire 1 in the normal state when mounted on the regular rim R.

As shown in FIG. 12, one of or each of the paired bead portions 4 of the present embodiment comprises a rim guard 40. In a preferred aspect, each of the paired bead portions 4 comprises the rim guard 40.

The rim guard 40 is a rubber part having a triangular cross-section, and protruding outward in the tire axial direction from the carcass 6.

The rim guard 40 effectively prevents the rim flange Rf from coming into contact with curbs or the like when the tire is running.

In the present embodiment, the distance L9 in the tire radial direction from the outer end in the tire radial direction of the rim flange Rf of the regular rim R to the peak 40a in the tire axial direction of the rim guard 40 is set in a range from 1.0 to 10.0 mm.

Thereby, while protecting the rim flange Rf, air turbulence becomes less likely to occur between the rim guard 40 and the rim flange Rf, and noise performance can be improved.

### Examples

Based on the structure shown in Fig. 1, pneumatic tires of size 225/45R17 were experimentally manufactured according to specifications listed in Table 1. In each example tire, the average value of the first thickness was 3.0 mm, and the average value of the second thickness was 1.2 mm.

Further, as a comparative example tire, a pneumatic tire in which the land ratio of the tread portion was smaller than 65%, and the first portion and the second portion of the inner rubber had the same thickness of 1.2 mm, was experimentally manufactured. The comparative example tire was substantially the same as the example tires except for the land ratio and the inner rubber described above.

These test tires were measured for the vehicle exterior noise and vehicle interior noise.

Common specifications to the test tires and test methods are as follows.
Mounting rim: 17X7.0J
Tire pressure: 230 kPa
Test vehicle: 2000 cc displacement, all-wheel drive
Tire mounting position: all wheels
< vehicle interior noise >

when the test vehicle was coasting straight on a test course at 50 km/h, noise was measured with microphones set on the left side and right side of the driver's seat, and then the average value thereof was calculated.

As the test results, reciprocals of the calculated average values are indicated in Table 1 by an index number based on the comparative example being 100, wherein the larger the index number, the smaller the vehicle interior noise.

### < vehicle exterior noise >

when the test vehicle was coasting on the test course (straight asphalt road) at 50 km/h, by using microphones set on the left side and right side of the test course, pass-by noise was measured as the vehicle exterior noise, and then the average value thereof was calculated.

As the test results, reciprocals of the calculated average values are indicated in Table 1 by an index number based on the comparative example being 100, wherein the larger the index number, the smaller the vehicle exterior noise.

**Table 1**

| | Comparative example | Example 1 | Example 2 | Example 3 |
|---|---|---|---|---|
| Land ratio of Tread portion (%) | 63.5 | 65.0 | 70.0 | 80.0 |
| Average of first thickness t1 / Average of second thickness t2 | 1.0 | 2.5 | 2.5 | 2.5 |
| Vehicle interior noise (index) | 100 | 128 | 125 | 110 |
| Vehicle Exterior noise (index) | 100 | 112 | 115 | 117 |

As shown in Table 1, as the land ratios of the tread portions of Examples 1 to 3 were not less than 65%, the vehicle exterior noise became 112 to 117 points. Thus, it can be understood that the vehicle exterior noise was lower than the comparative example.

Further, as the first thicknesses in Examples 1 to 3 were large, the vehicle interior noise became 110 to 128 points. Thus, it can be understood that the vehicle interior noise was lower than in the comparative example.

That is, it was confirmed that the tires of Examples 1 to 3 were reduced in both the vehicle exterior noise and the vehicle interior noise as compared to the comparative example.

### Further Examples

Based on the structure shown in FIG. 1, pneumatic tires were experimentally manufactured according to specifications listed in Table 2. These tires were tested for low fuel consumption performance and noise performance.

Main common specifications thereto and test methods are as follows.

### < common specifications >

Tire size: 205/55R16
Air pressure: 230 kPa
Applied tore load: 4.2 kN
Loss tangent tan δ2 of second portion: 0.14

### < Low fuel consumption performance >

using a rolling resistance tester, the rolling resistance of each test tire was measured at a speed of 50 km/h.

The results are indicated in Table 2 by an index based on Reference Example being 100, wherein the larger the index number, the lower the rolling resistance and the better the fuel efficiency.

### < Noise performance >

using a tire noise tester installed in an anechoic room, the noise sound pressure was measured at a speed of 50 km/h.

The results are indicated in Table 2 by an index based on Reference Example being 100, wherein the larger the index number, the lower the noise sound pressure and the better the noise performance.

**Table 2**

| | Reference example | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|
| First thickness / Second thickness (times) | 1.0 | 2.0 | 2.0 | 2.0 | 2.0 | 2.0 | 2.0 | 2.0 | 2.0 | 2.0 | 2.0 | 2.0 |
| Loss tangent tan δ1 of First portion | 0.14 | 0.14 | 0.14 | 0.14 | 0.15 | 0.20 | 0.14 | 0.14 | 0.14 | 0.14 | 0.14 | 0.14 |
| Loss tangent tan δA of Cap rubber | 0.30 | 0.30 | 0.25 | 0.20 | 0.30 | 0.30 | 0.30 | 0.30 | 0.30 | 0.30 | 0.30 | 0.30 |
| Loss tangent tan δB of Base rubber | 0.21 | 0.21 | 0.21 | 0.21 | 0.21 | 0.21 | 0.20 | 0.21 | 0.21 | 0.21 | 0.21 | 0.21 |
| Loss tangent tan δC of Topping rubber of Carcass ply | 0.16 | 0.16 | 0.16 | 0.16 | 0.16 | 0.16 | 0.16 | 0.15 | 0.16 | 0.16 | 0.16 | 0.16 |
| Loss tangent tan δD of Topping rubber of Belt ply | 0.16 | 0.16 | 0.16 | 0.16 | 0.16 | 0.16 | 0.16 | 0.16 | 0.15 | 0.16 | 0.16 | 0.16 |
| Loss tangent tan δF of Topping rubber of Band ply | 0.16 | 0.16 | 0.16 | 0.16 | 0.16 | 0.16 | 0.16 | 0.16 | 0.16 | 0.15 | 0.16 | 0.16 |
| Complex elastic modulus E*A of Tread rubber | 7.8 | 7.8 | 7.8 | 7.8 | 7.8 | 7.8 | 7.8 | 7.8 | 7.8 | 7.8 | 8.0 | 9.0 |
| Low fuel consumption performance (index) | 100 | 100 | 110 | 120 | 100 | 100 | 110 | 100 | 110 | 110 | 100 | 100 |
| Noise performance (index) | 100 | 120 | 115 | 110 | 120 | 130 | 120 | 125 | 120 | 120 | 125 | 125 |
| Overall performance (index) | 200 | 220 | 225 | 230 | 220 | 230 | 230 | 225 | 230 | 230 | 225 | 225 |

From the test results, it was confirmed that, as compared to Reference example, the pneumatic tires as Examples exhibited the same or better fuel economy performance while improving the noise performance, and excellent overall performance represented by the sum of these index numbers, and thus both the low fuel consumption performance and the noise performance were achieved.

### Description of the reference signs

2 Tread
3 sidewall portion
4 Bead portion
6 carcass
10 Inner rubber
11 First portion
12 second portion
t1 First thickness
t2 second thickness

## Claims

1. A pneumatic tire (1) comprising a tread portion (2), a pair of sidewall portions (3), a pair of bead portions (4), a carcass (6) extending between the paired bead portions (4), and an inner rubber (10) extending between the paired bead portions (4), on the inner side of the carcass (6), the tread portion (2) comprising a tread rubber (2G) forming a ground contact surface (2s),
wherein
the inner rubber (10) comprises a first portion (11) extending in the tread portion (2) with a first thickness (t1), and a second portion (12) extending in the pair of sidewall portions (3) with a second thickness (t2), and
the first thickness (t1) is more than the second thickness (t2),
**characterized in that**
a land ratio of the tread portion (2) is not less than 65 %, and
the loss tangent tan δ1 of the first portion (11) at 70 degrees c is not less than the loss tangent tan δ2 of the second portion (12) at 70 degrees C and not more than the loss tangent tan δA of the tread rubber (2G) at 30 degrees C, wherein the loss tangent tan δ is measured according to JIS-K6394 by using a dynamic viscoelasticity measuring device at a measurement temperature of 30 degrees C or 70 degrees C, an initial strain of 5 % when the measuring temperature is 30 degrees C or 10 % when the measuring temperature is 70 degrees C, an amplitude of dynamic strain of +/- 1 %, a frequency of 10 Hz, and at deformation mode: tensile.

2. The pneumatic tire (1) according to claim 1, wherein
an average value of the first thickness (t1) is 1.5 to 3.5 times an average value of the second thickness (t2).

3. The pneumatic tire (1) according to claim 1 or 2, wherein
the average value of the first thickness (t1) is 2.0 to 4.5 mm.

4. The pneumatic tire (1) according to claim 1, 2 or 3, wherein
the tread portion (2) comprises a first tread edge (T1), a tire equator (C), a crown land portion (37) arranged on the tire equator (c), and a first middle land portion (28) adjacent to the crown land portion (37) on the first tread edge side via a first crown circumferential groove (23), and
a land ratio of the crown land portion (37) is more than a land ratio of the first middle land portion (28).

5. The pneumatic tire (1) according to claim 4, wherein
the first middle land portion (28) is not divided in the tire circumferential direction by grooves having a groove width of 2 mm or more.

6. The pneumatic tire (1) according to claim 4 or 5, wherein
the tread portion (2) comprises a first shoulder land portion (26) adjacent to the first middle land portion (28) on the first tread edge (T1) side via a first shoulder circumferential groove (21), and
the land ratio of the first middle land portion (28) is more than a land ratio of the first shoulder land portion (26).

7. The pneumatic tire (1) according to claim 6, wherein
the maximum groove width of the first crown circumferential groove (23) is more than the maximum groove width of the first shoulder circumferential groove (21).

8. The pneumatic tire (1) according to any one of claims 1 to 7, wherein
the tread portion (2) comprises a plurality of circumferential grooves (20) extending continuously in the tire circumferential direction, and
the total groove width of the plurality of circumferential grooves (20) is 20% to 25% of the tread width (TW) of the tread portion (2).

9. The pneumatic tire (1) according to any one of claims 1 to 8, wherein
the outer surface of at least one of the paired sidewall portions (3) comprises a serration portion (30),
the serration portion (30) comprises a plurality of grooves (31) extending in the tire radial direction and arranged in the tire circumferential direction, and a plurality of ridges (32) divided by the plurality of grooves (31), and
each of the plurality of grooves (31) comprises an outer end portion (33) in the tire radial direction and has a depth (d1) of not more than 0.2 mm in the outer end portion (33).

10. The pneumatic tire (1) according to claim 9, wherein
each of the plurality of grooves (31) comprises an inner end portion (34) in the tire radial direction, and the depth decreases from the inner end portion (34) to the outer end portion (33).

11. The pneumatic tire (1) according to any one of claims 1 to 10, wherein
the loss tangent tan δ1 of the first portion (11) is 1.0 to 2.0 times the loss tangent tan δ2 of the second portion (12).

12. The pneumatic tire (1) according to any one of claims 1 to 11, wherein
the loss tangent tan δ1 of the first portion (11) is 0.4 to 0.7 times the loss tangent tan δA of the tread rubber (2G).

13. The pneumatic tire (1) according to any one of claims 1 to 12, wherein
the carcass (6) comprises carcass cords (6B) having a twist coefficient in a range from 2000 to 2500.

14. The pneumatic tire (1) according to any one of claims 1 to 13, wherein
the carcass (6) has a main body portion (6a) extending between the paired bead portions (4), and a turnup portion (6b) connected to the main body portion (6a) and folded back around a bead core (5) from the inside to outside in the tire axial direction, and
a radially outer end of the turnup portion (6b) is positioned outward in the tire radial direction of a maximum width position of the main body portion (6a).

## Patentansprüche

1. Luftreifen (1), umfassend einen Laufflächenabschnitt (2), ein Paar Seitenwandabschnitte (3), ein Paar Wulstabschnitte (4), eine Karkasse (6), die sich zwischen den gepaarten Wulstabschnitten (4) erstreckt, und einen Innengummi (10), der sich zwischen den gepaarten Wulstabschnitten (4) auf der Innenseite der Karkasse (6) erstreckt, wobei der Laufflächenabschnitt (2) einen Laufflächengummi (2G) umfasst, der eine Bodenkontaktfläche (2s) bildet,
wobei
der Innengummi (10) einen ersten Abschnitt (11), der sich in dem Laufflächenabschnitt (2) mit einer ersten Dicke (t1) erstreckt, und einen zweiten Abschnitt (12), der sich in dem Paar Seitenwandabschnitte (3) mit einer zweiten Dicke (t2) erstreckt, umfasst, und
die erste Dicke (t1) größer als die zweite Dicke (t2) ist,
**dadurch gekennzeichnet, dass**
ein Landverhältnis des Laufflächenabschnitts (2) nicht weniger als 65 % beträgt, und
der Verlusttangens tan δ1 des ersten Abschnitts (11) bei 70 Grad C nicht weniger als der Verlusttangens tan δ2 des zweiten Abschnitts (12) bei 70 Grad C und nicht mehr als der Verlusttangens tan δA des Laufflächengummis (2G) bei 30 Grad C beträgt, wobei der Verlusttangens tan δ gemäß JIS-K6394 unter Verwendung einer Messvorrichtung für die dynamische Viskoelastizität bei einer Messtemperatur von 30 Grad C oder 70 Grad C, einer Anfangsdehnung von 5 %, wenn die Messtemperatur 30 Grad C beträgt, oder 10 %, wenn die Messtemperatur 70 Grad C beträgt, einer Amplitude der dynamischen Dehnung von +/- 1 %, einer Frequenz von 10 Hz und im Verformungsmodus: Zug gemessen wird.

2. Luftreifen (1) nach Anspruch 1, wobei
ein Durchschnittswert der ersten Dicke (t1) das 1,5- bis 3,5-fache eines Durchschnittswerts der zweiten Dicke (t2) beträgt.

3. Luftreifen (1) nach Anspruch 1 oder 2, wobei
der Durchschnittswert der ersten Dicke (t1) 2,0 bis 4,5 mm beträgt.

4. Luftreifen (1) nach Anspruch 1, 2 oder 3, wobei
der Laufflächenabschnitt (2) eine erste Laufflächenkante (T1), einen Reifenäquator (C), einen Kronenlandabschnitt (37), der auf dem Reifenäquator (C) angeordnet ist, und einen ersten mittleren Landabschnitt (28) benachbart zu dem Kronenlandabschnitt (37) auf der Seite der ersten Laufflächenkante via eine erste Kronenumfangsrille (23) umfasst, und
ein Landverhältnis des Kronenlandabschnitts (37) größer als ein Landverhältnis des ersten mittleren Landabschnitts (28) ist.

5. Luftreifen (1) nach Anspruch 4, wobei
der erste mittlere Landabschnitt (28) in der Reifenumfangsrichtung nicht durch Rillen mit einer Rillenbreite von 2 mm oder mehr unterteilt ist.

6. Luftreifen (1) nach Anspruch 4 oder 5, wobei
der Laufflächenabschnitt (2) einen ersten Schulterlandabschnitt (26) benachbart zu dem ersten mittleren Landabschnitt (28) auf der Seite der ersten Laufflächenkante (T1) via eine erste Schulterumfangsrille (21) umfasst, und
das Landverhältnis des ersten mittleren Landabschnitts (28) größer als ein Landverhältnis des ersten Schulterlandabschnitts (26) ist.

7. Luftreifen (1) nach Anspruch 6, wobei
die maximale Rillenbreite der ersten Kronenumfangsrille (23) größer als die maximale Rillenbreite der ersten Schulterumfangsrille (21) ist.

8. Luftreifen (1) nach einem der Ansprüche 1 bis 7, wobei
der Laufflächenabschnitt (2) eine Vielzahl von Umfangsrillen (20) umfasst, die sich kontinuierlich in der Reifenumfangsrichtung erstrecken, und
die Gesamtrillenbreite der Vielzahl von Umfangsrillen (20) 20 % bis 25 % der Laufflächenbreite (TW) des Laufflächenabschnitts (2) beträgt.

9. Luftreifen (1) nach einem der Ansprüche 1 bis 8, wobei
die Außenfläche von mindestens einem der gepaarten Seitenwandabschnitte (3) einen Verzahnungsabschnitt (30) umfasst,
der Verzahnungsabschnitt (30) eine Vielzahl von Rillen (31), die sich in der Reifenradialrichtung erstrecken und in der Reifenumfangsrichtung angeordnet sind, und eine Vielzahl von Rippen (32), die durch die Vielzahl von Rillen (31) geteilt sind, umfasst, und
jede der Vielzahl von Rillen (31) einen äußeren Endabschnitt (33) in der Reifenradialrichtung umfasst und eine Tiefe (d1) von nicht mehr als 0,2 mm in dem äußeren Endabschnitt (33) aufweist.

10. Luftreifen (1) nach Anspruch 9, wobei
jede der Vielzahl von Rillen (31) einen inneren Endabschnitt (34) in der Reifenradialrichtung umfasst und die Tiefe von dem inneren Endabschnitt (34) zu dem äußeren Endabschnitt (33) abnimmt.

11. Luftreifen (1) nach einem der Ansprüche 1 bis 10, wobei
der Verlusttangens tan δ1 des ersten Abschnitts (11) das 1,0- bis 2,0-fache des Verlusttangens tan δ2 des zweiten Abschnitts (12) beträgt.

12. Luftreifen (1) nach einem der Ansprüche 1 bis 11, wobei
der Verlusttangens tan δ1 des ersten Abschnitts (11) das 0,4- bis 0,7-fache des Verlusttangens tan δA des Laufflächengummis (2G) beträgt.

13. Luftreifen (1) nach einem der Ansprüche 1 bis 12, wobei
die Karkasse (6) Karkasskorde (6B) mit einem Verdrillungskoeffizienten in einem Bereich von 2000 bis 2500 umfasst.

14. Luftreifen (1) nach einem der Ansprüche 1 bis 13, wobei
die Karkasse (6) einen Hauptkörperabschnitt (6a), der sich zwischen den gepaarten Wulstabschnitten (4) erstreckt, und einen Umschlagabschnitt (6b) aufweist, der mit dem Hauptkörperabschnitt (6a) verbunden ist und um einen Wulstkern (5) von der Innenseite zur Außenseite in der axialen Richtung des Reifens umgeschlagen ist, und
ein radial äußeres Ende des Umschlagabschnitts (6b) in der Reifenradialrichtung außen von einer Position maximaler Breite des Hauptkörperabschnitts (6a) positioniert ist.

## Revendications

1. Pneumatique (1) comprenant une partie bande de roulement (2), une paire de parties flanc (3), une paire de parties talon (4), une carcasse (6) s'étendant entre les parties talon en paire (4), et un caoutchouc intérieur (10) s'étendant entre les parties talon en paire (4), sur le côté intérieur de la carcasse (6), la partie bande de roulement (2) comprenant un caoutchouc de bande de roulement (2G) formant une surface de contact avec le sol (2s), dans lequel
le caoutchouc intérieur (10) comprend une première partie (11) s'étendant dans la partie bande de roulement (2) avec une première épaisseur (t1), et une deuxième partie (12) s'étendant dans la paire de parties flanc (3) avec une deuxième épaisseur (t2), et
la première épaisseur (t1) est supérieure à la deuxième épaisseur (t2),
**caractérisé en ce que**
le rapport de relief de la partie bande de roulement (2) n'est pas inférieur à 65 %, et
la tangente de perte tan δ1 de la première partie (11) à 70 °C n'est pas inférieure à la tangente de perte tan δ2 de la deuxième partie (12) à 70 °C et n'est pas supérieure à la tangente de perte tan δA du caoutchouc de bande de roulement (2G) à 30 °C, la tangente de perte tan δ étant mesurée selon la norme JIS-K6394 à l'aide d'un dispositif de mesure de la viscoélasticité dynamique à une température de mesure de 30 °C ou 70 °C, une déformation initiale de 5 % lorsque la température de mesure est de 30 °C ou de 10 % lorsque la température de mesure est de 70 °C, une amplitude de déformation dynamique de +/- 1 %, une fréquence de 10 Hz et en mode de déformation : traction.

2. Pneumatique (1) selon la revendication 1, dans lequel
la valeur moyenne de la première épaisseur (t1) est de 1,5 à 3,5 fois la valeur moyenne de la deuxième épaisseur (t2).

3. Pneumatique (1) selon la revendication 1 ou 2, dans lequel
la valeur moyenne de la première épaisseur (t1) est de 2,0 à 4,5 mm.

4. Pneumatique (1) selon la revendication 1, 2 ou 3, dans lequel
la partie bande de roulement (2) comprend un premier bord de bande de roulement (T1), un équateur de pneu (C), une partie en relief de couronne (37) disposée sur l'équateur de pneu (C), et une première partie en relief centrale (28) adjacente à la partie en relief de couronne (37) sur le côté du premier bord de bande de roulement via une première rainure circonférentielle de couronne (23), et
le rapport de relief de la partie en relief de couronne (37) est supérieur au rapport de relief de la première partie en relief centrale (28).

5. Pneumatique (1) selon la revendication 4, dans lequel
la première partie en relief centrale (28) n'est pas divisée dans la direction circonférentielle du pneu par des rainures ayant une largeur de rainure de 2 mm ou plus.

6. Pneumatique (1) selon la revendication 4 ou 5, dans lequel
la partie bande de roulement (2) comprend une première partie en relief d'épaulement (26) adjacente à la première partie en relief centrale (28) sur le côté du premier bord de bande de roulement (T1) via une première rainure circonférentielle d'épaulement (21), et
le rapport de relief de la première partie en relief centrale (28) est supérieur au rapport de relief de la première partie en relief d'épaulement (26).

7. Pneumatique (1) selon la revendication 6, dans lequel
la largeur de rainure maximale de la première rainure circonférentielle de couronne (23) est supérieure à la largeur de rainure maximale de la première rainure circonférentielle d'épaulement (21).

8. Pneumatique (1) selon l'une quelconque des revendications 1 à 7, dans lequel
la partie bande de roulement (2) comprend une pluralité de rainures circonférentielles (20) s'étendant de manière continue dans la direction circonférentielle du pneu, et
la largeur de rainure totale de la pluralité de rainures circonférentielles (20) est de 20 % à 25 % de la largeur de bande de roulement (Tw) de la partie bande de roulement (2).

9. Pneumatique (1) selon l'une quelconque des revendications 1 à 8, dans lequel
la surface extérieure d'au moins une des parties flanc en paire (3) comprend une partie dentelée (30),
la partie dentelée (30) comprend une pluralité de rainures (31) s'étendant dans la direction radiale du pneu et disposées dans la direction circonférentielle du pneu, et une pluralité de nervures (32) divisées par la pluralité de rainures (31), et
chacune de la pluralité de rainures (31) comprend une partie d'extrémité extérieure (33) dans la direction radiale du pneu et a une profondeur (d1) ne dépassant pas 0,2 mm dans la partie d'extrémité extérieure (33).

10. Pneumatique (1) selon la revendication 9, dans lequel
chacune de la pluralité de rainures (31) comprend une partie d'extrémité intérieure (34) dans la direction radiale du pneu, et la profondeur diminue depuis la partie d'extrémité intérieure (34) vers la partie d'extrémité extérieure (33).

11. Pneumatique (1) selon l'une quelconque des revendications 1 à 10, dans lequel
la tangente de perte tan δ1 de la première partie (11) est de 1,0 à 2,0 fois la tangente de perte tan δ2 de la deuxième partie (12).

12. Pneumatique (1) selon l'une quelconque des revendications 1 à 11, dans lequel
la tangente de perte tan δ1 de la première partie (11) est de 0,4 à 0,7 fois la tangente de perte tan δA du caoutchouc de bande de roulement (2G).

13. Pneumatique (1) selon l'une quelconque des revendications 1 à 12, dans lequel
la carcasse (6) comprend des câbles de carcasse (6B) ayant un coefficient de torsion compris dans une plage de 2000 à 2500.

14. Pneumatique (1) selon l'une quelconque des revendications 1 à 13, dans lequel
la carcasse (6) présente une partie corps principal (6a) s'étendant entre les parties talon en paire (4), et une partie retournée (6b) reliée à la partie corps principal (6a) et repliée vers l'arrière autour d'une tringle (5) depuis l'intérieur vers l'extérieur dans la direction axiale du pneu, et
une extrémité radialement extérieure de la partie retournée (6b) est positionnée vers l'extérieur dans la direction radiale du pneu d'une position de largeur maximale de la partie corps principal (6a).
